# DEMANDE DE BREVET EUROPEEN

(11) **EP 0 714 820 A1**
(43) Date de publication de la demande: **05.06.1996**
(21) Numéro de dépôt: 95118474.6
(22) Date de dépôt: 23.11.1995
(51) Int. Cl.: B60S 1/38

(54) **Balai d'essuie-glace comportant des moyens perfectionnés d'immobilisation longitudinale de la raclette d'essuyage**

(30) Priorité: 29.11.1994 FR 9414427
(71) Demandeur: VALEO SYSTEMES D'ESSUYAGE, F-78321 La Verrière (FR)
(72) Inventeur: Giraud, Frédéric, F-63000 Clermont-Ferrand (FR)
(74) Mandataire: Gamonal, Didier

(57) **Abrégé**

L'invention propose un balai d'essuie-glace, comportant une raclette d'essuyage (12) dont un talon longitudinal supérieur (22) de liaison est relié à un composant qui comporte un anneau ouvert de liaison (44) dont chacune des branches verticales (46) se prolonge par une patte transversale (50) qui est reçue sous une face horizontale (52) inférieure du talon (22), et du type dans lequel le talon (22) comporte deux rainures longitudinales opposées (28) dont chacune reçoit une vertèbre de renfort (24) dont un bord latéral extérieur (32) comporte une encoche de verrouillage (38) prévue pour recevoir l'une des deux branches verticales (56) d'une cavalier intermédiaire de verrouillage (54), caractérisé en ce que chacune des branches verticales (56) du cavalier intermédiaire de verrouillage (54) se prolonge par une patte transversale (50) qui est reçue sous ladite face horizontale inférieure (52) du talon (22) et dont l'extrémité libre pénètre dans un trou correspondant de la raclette (12).

## Description

La présente invention concerne un balai d'essuie-glace, notamment de véhicule automobile.

L'invention concerne plus particulièrement un balai d'essuie-glace comportant une raclette d'essuyage dont un talon longitudinal supérieur de liaison est relié à un composant d'une structure de support de la raclette d'essuyage gui comporte un anneau ouvert de liaison sensiblement en forme de U inversé qui chevauche le talon et dont chacune des branches verticales se prolonge par une patte transversale qui est reçue sous une face horizontale inférieure du talon, et du type dans lequel le talon comporte deux rainures longitudinales opposées dont chacune est formée dans une face latérale verticale du talon et qui reçoit une vertèbre de renfort réalisée sous la forme d'une plaque horizontale de renfort dont un bord latéral extérieur comporte des moyens de verrouillage du composant de la structure de support par rapport à la vertèbre.

Un exemple d'une telle conception d'un balai d'essuie-glace est décrit et représenté dans le document FR-A-2.502.086 dans lequel une encoche de verrouillage formée dans le bord latéral de chaque vertèbre est délimitée par deux pattes de butée réalisées par découpage et qui font saillie transversalement vers l'extérieur par rapport au plan général du bord longitudinal extérieur de la vertèbre.

Outre la complexité de la découpe réalisée dans la vertèbre et la nécessité de déformer les pattes de butée vers l'extérieur après avoir réalisé la découpe, cette conception a pour inconvénient d'imposer de déformer élastiquement les branches verticales de la griffe de liaison, légèrement en écartement l'une de l'autre, lors de l'introduction par coulissement longitudinale du talon dans la griffe jusqu'à ce que la branche verticale franchisse la rampe constituée par la première patte de retenue qu'elle rencontre pour venir ensuite s'emboîter élastiquement dans l'encoche.

Par ailleurs, la conception décrite dans ce document rend le démontage de la raclette d'essuyage, en vue de son remplacement, particulièrement difficile dans la mesure où l'opérateur doit comprimer transversalement vers l'intérieur les pattes de retenue pour permettre à nouveau l'extraction longitudinale de la raclette d'essuyage par coulissement du talon supérieur entre les branches verticales de la griffe de liaison.

On connaît du document FR-A-2.215.048 une conception d'un balai d'essuie-glace dans laquelle les encoches de verrouillage formées dans les vertèbres longitudinales de renfort sont de forme très simple et ne comportent aucune patte de retenue en saillie transversale et déformable élastiquement.

Dans cette conception, l'immobilisation longitudinale de la vertèbre par rapport au talon est assurée au moyen d'un cavalier intermédiaire qui est mis en place verticalement sur le talon et qui nécessite d'effectuer dans le matériau constitutif du corps du talon des découpes ou des entailles en regard des encoches de verrouillage formées dans le bord latéral extérieur des vertèbres de renfort.

La mise en place de la griffe en forme d'anneau ouvert du palonnier de liaison s'effectue en franchissant des pattes déformables élastiquement agencées sur les branches latérales du cavalier intermédiaire de verrouillage, la conception de ce dernier étant particulièrement complexe et les opérations de démontage étant à nouveau rendues difficiles du fait de la nécessité de déformer élastiquement les pattes de verrouillage formées à l'extérieur du cavalier de verrouillage de part et d'autre de la raclette.

La présente invention a pour but de proposer une nouvelle conception d'un balai d'essuie-glace dont les moyens d'immobilisation longitudinale relative de la griffe de liaison par rapport aux vertèbres de renfort permettent de remédier aux inconvénients qui viennent d'être mentionnés.

Dans ce but, l'invention propose un balai d'essuie-glace, notamment de véhicule automobile, du type mentionné précédemment dans lequel chaque vertèbre de renfort est réalisée sous la forme d'une plaque horizontale de renfort dont un bord latéral extérieur comporte une encoche de verrouillage prévue pour recevoir l'une des deux branches verticales d'un cavalier intermédiaire de verrouillage en forme de U inversé qui chevauche le talon, et du type dans lequel le cavalier de verrouillage comporte une butée longitudinale qui coopère avec l'anneau ouvert de liaison, caractérisé en ce que chacune des branches verticales du cavalier de verrouillage se prolonge par une patte transversale qui est reçue sous la face horizontale inférieure du talon et dont l'extrémité libre pénètre dans un trou correspondant de la raclette.

Selon d'autres caractéristiques de l'invention :
- le trou est formé dans une âme longitudinale de la raclette qui relie la lame d'essuyage au talon ;
- les deux trous opposés dont chacun reçoit l'extrémité libre d'une patte transversale du cavalier intermédiaire de verrouillage communiquent entre eux pour constituer un trou débouchant qui traverse l'âme longitudinale de liaison ;
- le talon supérieur de liaison est réalisé en matériau déformable élastiquement et le bord latéral extérieur de chaque vertèbre affleure la face latérale verticale correspondante du talon ;
- les branches verticales du cavalier sont reliées par une branche horizontale transversale qui s'étend au-dessus de la face supérieure du talon, et la butée longitudinale est formée sur un prolongement longitudinal de la branche horizontale du cavalier ;
- la butée longitudinale est constituée par l'extrémité libre repliée et déformable élastiquement du prolongement longitudinal de la branche horizontale du cavalier ;
- l'anneau ouvert de liaison chevauche le prolongement longitudinal de la branche horizontale du cavalier.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective partiellement éclatée d'un tronçon d'une raclette d'essuyage réalisée conformément aux enseignements de l'invention en association avec ses deux vertèbres de renfort, le cavalier intermédiaire de verrouillage, et une extrémité d'un pont de liaison appartenant à une structure de support d'un balai d'essuie-glace selon l'invention ;
- la figure 2 est une vue similaire à celle de la figure 1 qui illustre les mêmes composants en position assemblée ;
- la figure 3 est une vue en section selon la ligne 3-3 de la figure 2 ; et
- la figure 4 est une vue en bout selon la flèche 4 de la figure 2.

On reconnaît sur les figures une partie d'un balai d'essuie-glace qui est pour l'essentiel constitué par une raclette d'essuyage 12 et par un palonnier 14 appartenant à une structure articulée de support de la raclette d'essuyage 12.

La raclette 12 comporte une lame d'essuyage 16 qui est prévue pour coopérer, en usage normal, avec la vitre à essuyer (non représentée) et qui est reliée par une âme 18 et par des ailes 20 à un talon de liaison 22 renforcé par deux vertèbres métalliques de renfort 24.

A l'exception des vertèbres 24, l'ensemble de la raclette 12 est réalisé sous la forme d'un profilé en caoutchouc ou en matériau élastomère.

Le talon supérieur longitudinal de liaison 22 présente, en section transversale, sensiblement la forme d'un rectangle et son corps massif en matériau élastomère 26 comporte deux rainures longitudinales horizontales et opposées 28 qui sont agencées symétriquement par rapport au plan vertical médian de symétrie de la raclette d'essuyage 12.

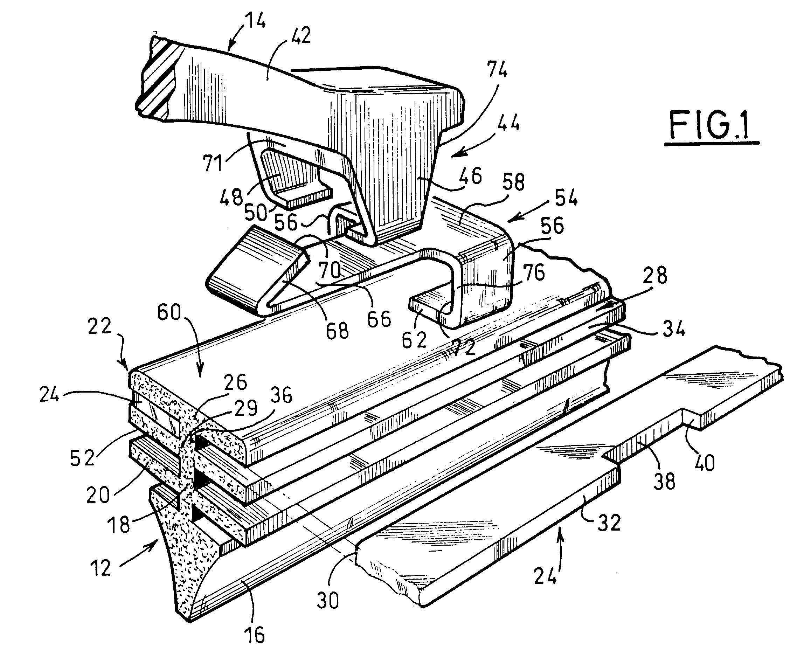

Les dimensions de chacune des rainures longitudinales 28 du talon 12 sont telles que, lorsque la vertèbre 24 est en place dans une rainure 28, comme cela est illustré sur la partie gauche de la figure 1, son bord latéral intérieur 30 est en appui contre le fond 36 de la rainure 28 et son bord latéral extérieur 32 affleure la face latérale verticale 34 du corps 22 du talon 12.

Comme on peut le voir sur la figure 1, le bord latéral intérieur 30 de chaque vertèbre 24 est parfaitement lisse et ne comporte aucune dent ou harpon en vue de l'accrochage de la vertèbre dans la bande médiane de liaison 29 délimitée par les fonds 36 des deux rainures opposées 28.

Selon une conception connue, le bord latéral extérieur 32 de chaque vertèbre 24 comporte une encoche rectangulaire 38, qui est découpée dans la vertèbre en forme de plaque métallique et qui délimite deux faces transversales opposées de butées longitudinales 40.

La branche longitudinale principale 42 du palonnier 14 se termine par une extrémité 44, également appelée griffe, en forme d'anneau ouvert verticalement vers le bas qui présente, en section transversale, la forme d'un U inversé et dont chacune des branches latérales verticales 46 est telle que la distance séparant les faces latérales internes 48 des branches 46 soit légèrement supérieure à la distance séparant les faces latérales opposées 34 du talon 22 de manière à ce que ce dernier puisse être reçu en coulissement entre les branches verticales 46 de la griffe 44.

Chacune des branches 46 se prolonge transversalement vers l'intérieur par une patte 50 qui est reçue sous la face horizontale inférieure 52 du talon 22 et donc au-dessus de l'aile correspondante 20.

Conformément à l'invention, il est prévu un cavalier intermédiaire de verrouillage 54.

Le cavalier 54 est constitué par deux branches latérales verticales et opposées 56 qui sont reliées entre elles par une branche horizontale supérieure 58 qui, en position montée, s'étend au-dessus de la face horizontale supérieure 60 du talon 22.

Les dimensions longitudinales de chacune des branches verticales 56 du cavalier intermédiaire de verrouillage 54 sont telles qu'elles puissent être reçues entre les faces de butée 40 des encoches 38 des vertèbres 24.

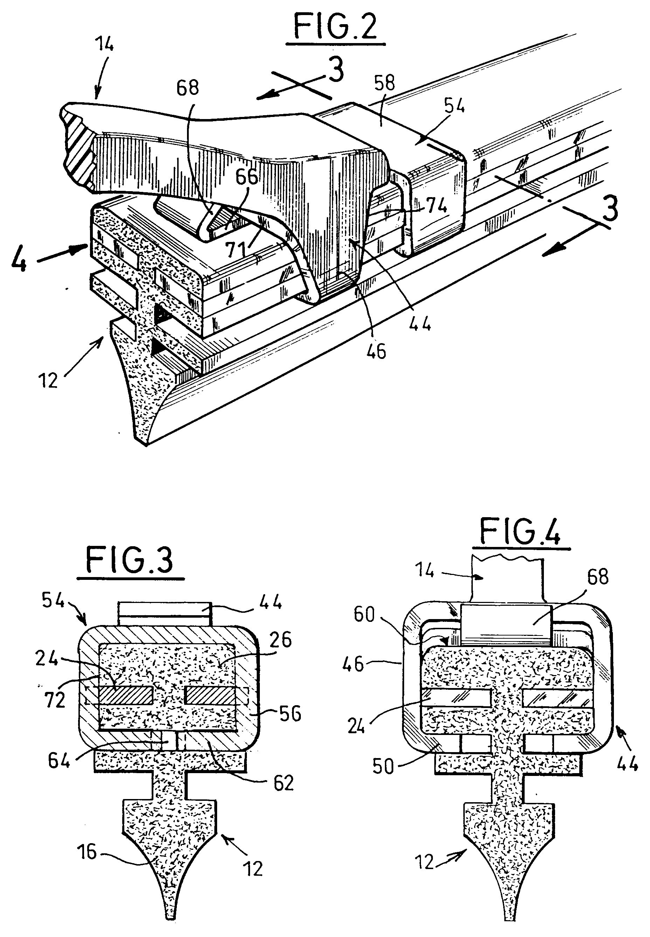

Chaque branche verticale 56 du cavalier 54 se prolonge transversalement vers l'intérieur par une patte transversale de blocage 62 qui s'étend sous la face horizontale inférieure 52 du talon 22 et transversalement à l'intérieur d'un trou débouchant 64 qui est formé en vis-à-vis dans l'âme 18 qui relie la lame 16 au talon 22 (voir figure 3).

La branche supérieure horizontale 58 du cavalier intermédiaire de verrouillage 54 comporte également un prolongement longitudinal et horizontal 66 qui s'étend au-dessus de la face horizontale 60 du talon 22 et qui se termine à son extrémité libre par une partie repliée 68 dont le bord d'extrémité libre 70 constitue une surface longitudinale de butée susceptible de coopérer avec une surface de butée 71 formée en vis-à-vis sur la griffe 44 du palonnier 14.

En position montée, comme cela est illustré notamment à la figure 3, chacune des faces latérales intérieures 72 des branches verticales 56 du cavalier intermédiaire de verrouillage 54 comprime transversalement le matériau déformable élastiquement qui constitue le corps 26 du talon 12 de manière à pouvoir pénétrer dans les encoches 38 des vertèbres 24.

De ce fait, les vertèbres 24 sont immobilisées longitudinalement par rapport au cavalier 54 et ce dernier est immobilisé longitudinalement par rapport à la raclette 12 du fait de la réception des extrémités libres des pattes transversales 62 des branches verticales 56 dans le trou 64.

Le cavalier intermédiaire de verrouillage 54 assure donc ainsi l'immobilisation longitudinale des vertèbres de renfort 24 par rapport au talon 22.

En position montée, la griffe 44 chevauche le prolongement longitudinal 66 de la branche supérieure horizontale 58 du cavalier 54 et assure ainsi l'immobilisation de la raclette 12 par rapport au pontet 14.

En effet, le bord 70 de la partie rabattue 68 du prolongement longitudinal 66 s'étend en vis-à-vis de la surface de butée 71 de la griffe 44 et les bords verticaux 74 des branches verticales 46 de la griffe 44 s'étendent en regard des bords verticaux en vis-à-vis 76 des branches verticales 56 du cavalier intermédiaire de verrouillage 54.

L'assemblage des différents composants s'effectue de la manière suivante.

L'opérateur commence par mettre en place les vertèbres 24 de renfort dans les rainures 28 du talon 22.

Du fait du positionnement géométrique des encoches 38 longitudinalement dans chacune des vertèbres 24, ces encoches 38 sont situées longitudinalement au même niveau que le trou 64 prévu dans l'âme 18.

L'opérateur met ensuite en place le cavalier intermédiaire de verrouillage 54 en le déformant élastiquement pour permettre le passage en coulissement des pattes transversales 62 sous la face inférieure 52 du talon 22 puis pour permettre, par relâchement élastique, la pénétration des extrémités des pattes 62 dans le trou 64.

L'utilisateur peut ensuite mettre en place les griffes 44 en faisant coulisser la griffe 44 avec ses pattes 50 sous la face 52 et en déformant élastiquement la partie rabattue 68 du prolongement longitudinal 66 de la branche horizontale 58 du cavalier intermédiaire de verrouillage 54.

Après les opérations d'assemblage, les composants occupent leurs positions respectives illustrées aux figures 2 à 4.

## Revendications

1. Balai d'essuie-glace, notamment de véhicule automobile, comportant une raclette d'essuyage (12) dont un talon longitudinal supérieur (22) de liaison est relié à un composant (14) d'une structure de support de la raclette d'essuyage (12) qui comporte un anneau ouvert de liaison (44) sensiblement en forme de U inversé qui chevauche le talon (22) et dont chacune des branches verticales (46) se prolonge par une patte transversale (50) qui est reçue sous une face horizontale (52) inférieure du talon (22), du type dans lequel le talon (22) comporte deux rainures longitudinales opposées (28) dont chacune est formée dans une face latérale verticale (34) du talon (22) et reçoit une vertèbre de renfort (24) réalisée sous la forme d'une plaque horizontale de renfort dont un bord latéral extérieur (32) comporte une encoche de verrouillage (38) prévue pour recevoir l'une des deux branches verticales (56) d'une cavalier intermédiaire de verrouillage (54) en forme de U inversé qui chevauche le talon (22), et du type dans lequel le cavalier intermédiaire de verrouillage (54) comporte une butée longitudinale (68, 70) qui coopère avec l'anneau ouvert de liaison (44, 71), caractérisé en ce que chacune des branches verticales (56) du cavalier intermédiaire de verrouillage (54) se prolonge par une patte transversale (50) qui est reçue sous ladite face horizontale inférieure (52) du talon (22) et dont l'extrémité libre pénètre dans un trou correspondant (64) de la raclette (12).

2. Balai d'essuie-glace selon la revendication 1, caractérisé en ce que le trou (64) est formé dans une âme longitudinale (18) de la raclette (12) qui relie la lame d'essuyage (16) au talon (22).

3. Balai d'essuie-glace selon la revendication 2, caractérisé en ce que les deux trous opposés dont chacun reçoit l'extrémité libre d'une patte transversale (62) du cavalier intermédiaire de verrouillage (54) communiquent entre eux pour constituer un trou débouchant (64) qui traverse l'âme longitudinale de liaison (18).

4. Balai d'essuie-glace selon l'une quelconque des revendications précédentes, caractérisé en ce que le talon supérieur de liaison (22) est réalisé en matériau déformable élastiquement, et en ce que le bord latéral extérieur (32) de chaque vertèbre (24) affleure la face latérale verticale correspondante (34) du talon (22).

5. Balai d'essuie-glace selon l'une quelconque des revendications précédentes, caractérisé en ce que les branches verticales (56) du cavalier (54) sont reliées par une branche horizontale transversale (58) qui s'étend au-dessus de la face supérieure (60) du talon (22), et en ce que ladite butée longitudinale (68, 70) est formée sur un prolongement longitudinal (66) de la branche horizontale (58) du cavalier intermédiaire de verrouillage (54).

6. Balai d'essuie-glace selon la revendication 5, caractérisé en ce que la butée longitudinale est constituée par l'extrémité libre repliée et déformable élastiquement (68, 70) du prolongement longitudinal (66) de la branche horizontale (58) du cavalier intermédiaire de verrouillage (54).

7. Balai d'essuie-glace selon l'une des revendications 5 ou 6, caractérisé en ce que l'anneau ouvert de liaison (44) chevauche le prolongement longitudinal (66) de la branche horizontale (58) du cavalier intermédiaire de verrouillage (54).
